# EUROPEAN PATENT SPECIFICATION

(11) **EP 0 932 647 B1**
(45) Date of publication and mention of the grant of the patent: **12.07.2000**
(21) Application number: 97912763.6
(22) Date of filing: 15.10.1997
(51) Int. Cl.: C08L 53/02, C08L 53/00, C08L 23/08, C08L 25/02

(54) **BLENDS OF ELASTOMER BLOCK COPOLYMER AND ALIPHATIC ALPHA-OLEFIN/MONOVINYLIDENE AROMATIC MONOMER AND/OR HINDERED ALIPHATIC VINYLIDENE MONOMER INTERPOLYMER**
MISCHUNGEN AUS ELASTOMEREN BLOCKCOPOLYMEREN UND INTERPOLYMEREN AUS ALIPHATISCHEN ALPHA-OLEFINEN, MONOVINYLIDEN-AROMATISCHEN MONOMEREN UND/ODER GEHINDERTEN ALIPHATISCHEN VINYLIDENEN MONOMEREN
MELANGES D'UN COPOLYMERE SEQUENCE ELASTOMERE, D'UN MONOMERE AROMATIQUE ALPHA-OLEFINO/NONOVINYLIDENE ET/OU D'UN INTERPOLYMERE MONOMERE VINYLIDENE ALIPHATIQUE INHIBE

(30) Priority: 15.10.1996 US 732108
(43) Date of publication of application: 04.08.1999
(73) Proprietor: THE DOW CHEMICAL COMPANY, Midland, Michigan 48674 (US)
(72) Inventor: ESNEAULT, Calvin, P., Baton Rouge, LA 70816 (US); EDMONSON, Morris, S., Alvin, TX 77511 (US); CHEUNG, Yunwa, W., Lake Jackson, TX 77566 (US); GUEST, Martin, J., Lake Jackson, TX 77566 (US); HO, Thoi, H., Lake Jackson, TX 77566 (US); SPETH, David, R., Midland, MI 48640 (US)
(74) Representative: Ottevangers, Sietse Ulbe
(86) International application number: PCT/US97/18773
(87) International publication number: WO 98/16582

(56) References cited:
- EP-A- 0 135 169
- EP-A- 0 545 181
- EP-A- 0 641 836
- WO-A-95/26380
- WO-A-95/33006

## Description

This invention relates to a thermoplastic elastomeric blend composition consisting of an elastomer block copolymer and an α-olefin/monovinylidene aromatic monomer and/or hindered aliphatic vinylidene monomer interpolymer, and to fabricated articles made therefrom.

Elastomer block copolymers of polystyrene and rubber are widely used in the industry, frequently for impact modification of thermoplastic resins and engineering thermoplastics or for compatibilization of different types of resins. The class of elastomer saturated rubber block copolymers, such as styrene-ethylene/butene-styrene block copolymers (S-EB-S), however, is expensive to produce and difficult to process. The class of unsaturated rubber block copolymers such as Styrene-Butadiene-Styrene (SBS) is susceptable to degradation. Blends of polymer components not readily miscible with these block copolymers, such as conventional polyethylenes, can exhibit inferior mechanical properties, especially elastomeric retention such as permanent tensile set after elongation.

It would be desirable to provide either lower cost or more durable blends of these block copolymers by adding a polymeric component that does not significantly decrease the required performance properties. It would be further desirable to provide blends of these block copolymers and a polymeric component thereby maintaining or improving the performance of these block copolymers while providing low haze blends. It would also be desirable to maintain a low value for hardness as desired for applications requiring flexibility such as sheet, film or tubing. It would also be desirable to maintain a high level of ultimate tensile properties to enhance the strength properties of the blends. Finally it would also be desirable to maintain a high level of % stress relaxation to enhance the surface conformity of the blends especially in applications requiring covering of a surface.

According to the present invention there is provided a thermoplastic elastomeric blend composition consisting of:
A) from 99 to 1 weight percent of a styrenic block copolymer; and
B) from 1 to 99 weight percent of a substantially random interpolymer of (1) at least one aliphatic α-olefin and (2) at least one vinylidene aromatic
monomer or (3) a combination of as least one vinylidene aromatic monomer and at least one hindered aliphatic vinylidene monomer, wherein said vinylidene aromatic monomer is present in an amount of from 0.6 to 15 mole % or from 17 to 65 mole % in said interpolymer.

Preferred embodiments of the invention are described in the dependent claims.

In yet another aspect, the present invention provides a fabricated article made from such a thermoplastic elastomeric blend composition.

In yet another aspect, the present invention comprises an adhesive or adhesive formulation or a sealant formulation containing the aforementioned blends.

The term "interpolymer" is used herein to indicate a polymer wherein at least two different monomers are polymerized to make the interpolymer.

The term "hydrocarbyl" means any aliphatic, cycloaliphatic, aromatic, aryl substituted aliphatic, aryl substituted cycloaliphatic, aliphatic substituted aromatic, or cycloaliphatic substituted aromatic groups. The aliphatic or cycloaliphatic groups are preferably saturated. Likewise, the term "hydrocarbyloxy" means a hydrocarbyl group having an oxygen linkage between it and the carbon atom to which it is attached.

The term "monomer residue" means that portion of the polymerizable monomer molecule which resides in the polymer chain as a result of being polymerized with another polymerizable molecule to make the polymer chain.

The term "substantially random" in the substantially random interpolymer comprising an α-olefin and a vinylidene aromatic monomer or hindered aliphatic vinylidene monomer as used herein means that the distribution of the monomers of said interpolymer can be described by the Bernoulli statistical model or by a first or second order Markovian statistical model, as described by J. C. Randall in POLYMER SEQUENCE DETERMINATION, Carbon-13 NMR Method, Academie Press New York, 1977, pp. 71-78. Preferably, the substantially random interpolymer comprising an α-olefin and a vinylidene aromatic monomer dies not contain more than 15 percent of the total amount of vinylidene aromatic monomer in blocks of vinylidene aromatic monomer of more than 3 units. More preferably, the interpolymer was not characterized by a high degree of either isotacticity of syndictacticity. This means that in the carbon-10 NMB spectrum of the substantially random interpolymer the peak areas corresponding to the main chain methylene and methine carbons representing either meso diad sequences or racemic diad sequences should not exceed 75 percent of the total peak area of the main chain methylene and methine carbons.

The term "block copolymer" is used herein to mean elastomers having at least one block segment of a hard polymer unit and at least one block segment of a rubber monomer unit. However, the term is not intended to include thermoelastic ethylene interpolymers which are, in general, random polymers. Preferred block copolymers contain hard segments of styrenic type polymers in combination with saturated or unsaturated rubber monomer segments. The structure of the block copolymers useful in the present invention is not critical and can be of the linear or radial type, either diblock or triblock, or any combination of thereof.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Suitable unsaturated block copolymers include those represented by the following formulas:

Formula I A-B-R(-B-A)ₙ

or

Formula II Aₓ-(BA-)_{y}-BA

wherein each A is a polymer block comprising a monovinylidene aromatic monomer, preferably styrene, and each B is a polymer block comprising a conjugated diene, preferably isoprene or butadiene, and optionally a monovinylidene aromatic monomer, preferably styrene; R is the remnant of a multifunctional coupling agent; n is an integer from 1 to 5; x is zero or 1; and y is a real number from zero to 4.

The preparation of the block copolymers useful herein is not the subject of the present invention. Methods for the preparation of such block copolymers are known in the art. Suitable catalysts for the preparation of useful block copolymers with unsaturated rubber monomer units include lithium based catalysts and especially lithium-alkyls. U.S. Pat. No. 3,595,942 describes suitable methods for hydrogenation of block copolymers with unsaturated rubber monomer units to from block copolymers with saturated rubber monomer units. The structure of the polymers is determined by their methods of polymerization. For example, linear polymers result by sequential introduction of the desired rubber monomer into the reaction vessel when using such initiators as lithium-alkyls or dilithiostilbene and the like, or by coupling a two segment block copolymer with a difunctional coupling agent. Branched structures, on the other hand, may be obtained by the use of suitable coupling agents having a functionality with respect to the block copolymers with unsaturated rubber monomer units of three or more. Coupling may be effected with multifunctional coupling agents such as dihaloalkanes or alkenes and divinyl benzene as well as with certain polar compounds such as silicon halides, siloxanes or esters of monohydric alcohols with carboxylic acids. The presence of any coupling residues in the polymer may be ignored for an adequate description of the block copolymers forming a part of the composition of this invention.

Suitable block copolymers having unsaturated rubber monomer units includes styrene-butadiene (SB), styrene-isoprene(SI), styrene-butadiene-styrene (SBS), styrene-isoprene-styrene (SIS), α-methylstyrene-butadiene-α-methylstyrene and α-methylstyrene-isoprene-α-methylstyrene.

The styrenic portion of the block copolymer is preferably a polymer or interpolymer of styrene and its analogs and homologs including α-methylstyrene and ring-substituted styrenes, particularly ring-methylated styrenes. The preferred styrenics are styrene and α-methylstyrene, and styrene is particularly preferred.

Block copolymers with unsaturated rubber monomer units may comprise homopolymers of butadiene or isoprene or they may comprise copolymers of one or both of these two dienes with a minor amount of styrenic monomer.

Preferred block copolymers with saturated rubber monomer units comprise at least one segment of a styrenic unit and at least one segment of an ethylene-butene or ethylene-propylene copolymer. Preferred examples of such block copolymers with saturated rubber monomer units include styrene/ethylene-butene copolymers, styrene/ethylene-propylene copolymers, styrene/ethylene-butene/styrene (SEBS) copolymers, styrene/ethylene-propylene/styrene (SEPS) copolymers.

Hydrogenation of block copolymers with unsaturated rubber monomer units is preferably effected by use of a catalyst comprising the reaction products of an aluminum alkyl compound with nickel or cobalt carboxylates or alkoxides under such conditions as to substantially completely hydrogenate at least 80 percent of the aliphatic double bonds while hydrogenating no more than 25 percent of the styrenic aromatic double bonds. Preferred block copolymers are those where at least 99 percent of the aliphatic double bonds are hydrogenated while less than 5 percent of the aromatic double bonds are hydrogenated.

The proportion of the styrenic blocks is generally between 8 and 65 percent by weight of the total weight of the block copolymer. Preferably, the block copolymers contain from 10 to 35 weight percent of styrenic block segments and from 90 to 65 weight percent of rubber monomer block segments, based on the total weight of the block copolymer.

The average molecular weights of the individual blocks may vary within certain limits. In most instances, the styrenic block segments will have number average molecular weights in the range of 5,000 to 125,000, preferably from 7,000 to 60,000 while the rubber monomer block segments will have average molecular weights in the range of 10,000 to 300,000, preferably from 30,000 to 150,000. The total average molecular weight of the block copolymer is typically in the range of 25,000 to 250,000, preferably from 35,000 to 200,000.

Further, the various block copolymers suitable for use in the present invention may be modified by graft incorporation of minor amounts of functional groups, such as, for example, maleic anhydride by any of the methods well known in the art.

Block copolymers useful in the present invention are commercially available, such as, for example, supplied by Shell Chemical Company under the designation of KRATON™ and supplied by Dexco Polymers under the designation of VECTOR™.

Blend component (B) for the polymer blend composition of the present invention include substantially random interpolymers prepared by polymerizing one or more α-olefin monomers with one or more vinylidene aromatic monomers and/or one or more hindered aliphatic or cycloaliphatic vinylidene monomers, and optionally with other polymerizable ethylenically unsaturated monomer(s).

Suitable α-olefin monomers contained in the blend component (B) include for example aliphatic and cycloaliphatic α-olefins having from 2 to 18 carbon atoms, and preferably α-olefins having from 2 to 8 carbon atoms. Most preferably, the aliphatic α-olefin of blend component (B) comprises ethylene or propylene, preferably ethylene, optionally together with one or more other α-olefins having from 3 to 8 carbon atoms, such as ethylene and propylene, or ethylene and octene, or ethylene and propylene and octene.

Suitable vinylidene aromatic monomers which can be employed to prepare the interpolymers include, for example, those represented by the following formula: 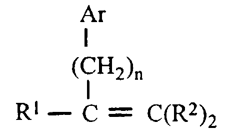 wherein R¹ is selected from the group of radicals consisting of hydrogen and alkyl radicals containing from 1 to 4 carbon atoms, preferably hydrogen or methyl; each R² is independently selected from the group of radicals consisting of hydrogen and alkyl radicals containing from 1 to 4 carbon atoms, preferably hydrogen or methyl; Ar is a phenyl group or a phenyl group substituted with from 1 to 5 substituents selected from the group consisting of halo, C₁₋₄-alkyl, and C₁₋₄-haloalkyl; and n has a value from zero to 4, preferably from zero to 2, most preferably zero. Exemplary monovinylidene aromatic monomers include styrene, vinyl toluene, α-methylstyrene, t-butyl styrene, chlorostyrene, including all isomers of these compounds. Particularly suitable such monomers include styrene and lower alkyl- or halogen-substituted derivatives thereof. Preferred monomers include styrene, α-methyl styrene, the lower alkyl- (C₁ - C₄) or phenyl-ring substituted derivatives of styrene, such as for example, ortho-, meta-, and para-methylstyrene, the ring halogenated styrenes, para-vinyl toluene or mixtures thereof. A more preferred aromatic monovinylidene monomer is styrene.

By the term "hindered aliphatic or cycloaliphatic vinylidene compounds", it is meant addition polymerizable vinylidene monomers corresponding to the formula: 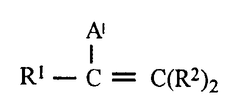 wherein A¹ is a sterically bulky, aliphatic or cycloaliphatic substituent of up to 20 carbons, R¹ is selected from the group of radicals consisting of hydrogen and alkyl radicals containing from 1 to 4 carbon atoms, preferably hydrogen or methyl; each R² is independently selected from the group of radicals consisting of hydrogen and alkyl radicals containing from 1 to 4 carbon atoms, preferably hydrogen or methyl; or alternatively R¹ and A¹ together form a ring system. By the term "sterically bulky" is meant that the monomer bearing this substituent is normally incapable of addition polymerization by standard Ziegler-Natta polymerization catalysts at a rate comparable with ethylene polymerizations. Preferred hindered aliphatic or cycloaliphatic vinylidene compounds are monomers in which one of the carbon atoms bearing ethylenic unsaturation is tertiary or quaternary substituted. Examples of such substituents include cyclic aliphatic groups such as cyclohexyl, cyclohexenyl, cyclooctenyl, or ring alkyl or aryl substituted derivatives thereof, tert-butyl, norbornyl. Most preferred hindered aliphatic or cycloaliphatic vinylidene compounds are the various isomeric vinyl- ring substituted derivatives of cyclohexene and substituted cyclohexenes, and 5-ethylidene-2-norbornene. Especially suitable are 1-, 3-, and 4-vinylcyclohexene.

The interpolymers of one or more α-olefins and one or more monovinylidene aromatic monomers and/or one or more hindered aliphatic or cycloaliphatic vinylidene monomers employed in the present invention as component (B) are substantially random polymers. These interpolymers usually contain from 1 to 65, preferably from 5 to 60, more preferably from 10 to 55 mole percent of at least one vinylidene aromatic monomer and/or hindered aliphatic or cycloaliphatic vinylidene monomer and from 35 to 99, preferably from 40 to 95, more preferably from 45 to 90 mole percent of at least one aliphatic α-olefin having from 2 to 20 carbon atoms

Preferably, higher molecular weight interpolymer component (B) are used, such as those that possess a number average Mw of greater than 13,000. Also preferably such polymers possess a melt index (I₂), ASTM D-1238 Procedure A, condition E, of less than 125, more preferably from 0.01 - 100, even more preferably from 0.01 to 25, and most preferably from 0.05 to 6. Also, the substantially random interpolymers have a heat of fusion of less than 50 J/g.

The present invention provides blends of interpolymer components of molecular weight and composition distributions selected to obtain an overall molecular weight and composition distribution which gives enhanced properties or processability.

While preparing the substantially random interpolymers, component (B), as will be described hereinafter, an amount of atactic vinylidene aromatic homopolymer may be formed due to homopolymerization of the vinylidene aromatic monomer at elevated temperatures. In general, the higher the polymerization temperature was, the higher is the amount of homopolymer formed. The presence of vinylidene aromatic homopolymer is in general not detrimental for the purposes of the present invention and may be tolerated. The vinylidene aromatic homopolymer may be separated from the interpolymer, if desired, by extraction techniques such as selective precipitation from solution with a non solvent for either the interpolymer or the vinylidene aromatic homopolymer. For the purpose of the present invention it is preferred that no more than 20 weight percent, preferably less than 15 weight percent based on the total weight of the interpolymers of vinylidene aromatic homopolymer is present.

The substantially random interpolymers may be modified by typical grafting, hydrogenation, functionalizing, or other reactions well known to those skilled in the art. The polymers may be readily sulfonated or chlorinated to provide functionalized derivatives according to established techniques.

The substantially random interpolymers are prepared by polymerizing a mixture of polymerizable monomers in the presence of metallocene or constrained geometry catalysts.

The substantially random interpolymers can be produced by polymerization in the presence of a metallocene or constrained geometry catalyst and a co-catalyst as described in EP-A-0,416,815 by James C. Stevens et al. and US Patent No. 5,703,187 by Francis J. Timmers. Preferred operating conditions for such polymerization reactions are pressures from atmospheric up to 3000 atmospheres and temperatures from -30°C to 200°C. Polymerizations and unreacted monomer removal at temperatures above the autopolymerization temperature of the respective monomers may result in formation of some amounts of homopolymer polymerization products resulting from free radical polymeritation.

Examples of suitable catalysts and methods for preparing the substantially random interpolymers are disclosed in EP-A-514,828; as well as U.S. Patents: 5,055,438; 5,057,475; 5,096,867; 5,064,802; 5,132,380; 5,189,192; 5,321,106; 5,347,024; 5,350,723; 5,374,696; 5,399,635; 5,470,993; 5,703,187; and 5,721,185.

The substantially random α-olefin/vinylidene aromatic interpolymers can also be prepared by the methods described by John G. Bradfute et al. (W. R. Grace & Co.) in WO 95/32095; by R. B. Pannell (Exxon Chemical Patents, Inc.) in WO 94/00500; and in Plastics Technology, p. 25 (September 1992).

The substantially random α-olefin/vinylidene aromatic interpolymers can also be prepared by the methods described in JP 07/278230 employing compounds shown by the general formula 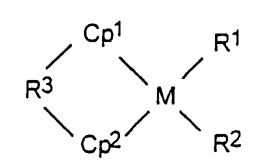 where Cp¹ and Cp² are cyclopentadienyl groups, indenyl groups, fluorenyl groups, or substituents of these, independently of each other; R¹ and R² are hydrogen atoms, halogen atoms, hydrocarbon groups with carbon numbers of 1-12, alkoxyl groups, or aryloxyl groups, independently of each other; M is a group IV metal, preferably Zr or Hf, most preferably Zr; and R³ is an alkylene group or silanediyl group used to cross-link Cp¹ and Cp².

Also suitable are the substantially random interpolymers which possess at least one α-olefin/vinyl aromatic/vinyl aromatic/α-olefin tetrad disclosed in a copending application by Francis J. Timmers et al. filed on the same date as this application. These interpolymers contain additional signals with intensities greater than three times the peak to peak noise. These signals appear in the chemical shift range 43.70-44.25 ppm and 38.0-39.5 ppm. Specifically, major peaks are observed at 44.1, 43.9 and 38.2 ppm. A proton test MMR experiment indicates that the signals in the chemical shift region 43.70-44.25 ppm are methine carbons and the signals in the region 38.0-38.5 ppm are methylene carbons.

In order to determine the carbon-13 NMR chemical shifts of these interpolymers, the following procedures and conditions are employed. A five to ten weight percent polymer solution is prepared in a mixture consisting of 50 volume percent 1,1,2,2-tetrachloroethane-d2 and 50 volume percent 0.10 molar chromium tris(acetylacetonate) in 1,2,4-trichlorobenzene. NMR spectra are acquired at 130°C using an inverse gated decoupling sequence, a 90° pulse width and a pulse delay of five seconds or more. The spectra are referenced to the isolated methylene signal of the polymer assigned at 30.000 ppm.

It is believed that these new signals are due to sequences involving two head-to-tail vinyl aromatic monomer preceded and followed by at least one α-olefininsertion, for example, an ethylene/styrene/styrene/ethylene tetrad wherein the styrene monomer insertions of said tetrads occur exclusively in a 1,2 (head to tail) manner. It is understood by one skilled in the art that for such tetrads involving a vinyl aromatic monomer other than styrene and an α-olefin other than ethylene that the ethylene/vinyl aromatic monomer/vinyl aromatic monomer/ethylene tetrad will give rise to similar carbon-13 NMR peaks but with slightly different chemical shifts.

These interpolymers are prepared by conducting the polymerization at temperatures of from -30°C to 250°C in the presence of such catalysts as those represented by the formula 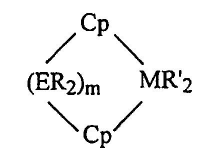 wherein: each Cp is independently, each occurrence, a substituted cyclopentadienyl group π-bound to M; E is C or Si; M is a group IV metal, preferably Zr or Hf, most preferably Zr; each R is independently, each occurrence, H, hydrocarbyl, silahydrocarbyl, or hydrocarbylsilyl, containing up to 30 preferably from 1 to 20 more preferably from 1 to 10 carbon or silicon atoms; each R' is independently, each occurrence, H, halo, hydrocarbyl, hyrocarbyloxy, silahydrocarbyl, hydrocarbylsilyl containing up to 30 preferably from 1 to 20 more preferably from 1 to 10 carbon or silicon atoms or two R' groups together can be a C₁₋₁₀ hydrocarbyl substituted 1,3-butadiene; m is 1 or 2; and optionally, but preferably in the presence of an activating cocatalyst. Particularly, suitable substituted cyclopentadienyl groups include those illustrated by the formula: 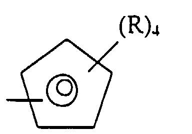 wherein each R is independently, each occurrence, H, hydrocarbyl, silahydrocarbyl, or hydrocarbylsilyl, containing up to 30 preferably from 1 to 20 more preferably from 1 to 10 carbon or silicon atoms or two R groups together form a divalent derivative of such group. Preferably, R independently each occurrence is (including where appropriate all isomers) hydrogen, methyl, ethyl, propyl, butyl, pentyl, hexyl, benzyl, phenyl or silyl or (where appropriate) two such R groups are linked together forming a fused ring system such as indenyl, fluorenyl, tetrahydroindenyl, tetrahydrofluorenyl, or octahydrofluorenyl.

Particularly preferred catalysts include, for example, racemic-(dimethylsilanediyl)-bis-(2-methyl-4-phenylindenyl))zirconium dichloride, racemic-(dimethylsilanediyl)-bis-(2-methyl-4-phenylindenyl))zirconium 1,4-diphenyl-1,3-butadiene, racemic-(dimethylsilanediyl)-bis-(2-methyl-4-phenylindenyl))zirconium di-C₁₋₄ alkyl, racemic-(dimethylsilanediyl)-bis-(2-methyl-4-phenylindenyl)) zirconium di-C₁₋₄ alkoxide, or any combination thereof.

Further preparative methods for the interpolymer blend component (B) of the present invention have been described in the literature. Longo and Grassi (Makromol. Chem., Volume 191, pages 2387 to 2396 [1990]) and D'Anniello et al. (Journal of Applied Polymer Science, Volume 58, pages 1701-1706 [1995]) reported the use of a catalytic system based on methylalumoxane (MAO) and cyclopentadienyltitanium trichloride (CpTiCl₃) to prepare an ethylene-styrene copolymer. Ku and Lin (Polymer Preprints, Am.Chem.Soc.,Div,. Polym. Chem.) Volume 35, pages 686,687 [1994]) have reported copolymerization using a TiCl₄/NdCl₃/Al(iBu)₃ catalyst to give random copolymers of styrene and propylene. Lu et al (Journal of Applied Polymer Science, Volume 53, pages 1453 to 1460 [1994]) have described the copolymerization of ethylene and styrene using a TiCl₄/NdCl₃/ MgCl₂ /Al(Et)₃ catalyst. The manufacture of α-olefin/vinyl aromatic monomer interpolymers such as propylene/styrene and butene/styrene are described in United States patent number 5,244,996, issued to Mitsui Petrochemical Industries Ltd.

Park et al., in United States patent number 5,460,818 issued to the Dow Chemical Company describes a method of increasing the toughness and solvent resistance of a homopolymer or interpolymer of a monovinylidene aromatic monomer, by blending it with an olefin polymer such as a polyethylene or ethylene/octene copolymer. However because of the incompatability of these two types of resins, there is a requirement for a compatabilizer which Park teaches can be a pseudo random interpolymer of an aliphatic α-olefin and a vinylidene aromatic monomer.

Generally, the blend composition of the present invention comprises from 1 percent to 99 percent, by weight of the composition, of the substantially random interpolymer of aliphatic α-olefin/vinylidene aromatic monomer component (B) and from 99 to 1 percent, by weight of the composition, of the elastomer block copolymer component (A). Preferably, the composition comprises from 1 percent to 50 percent, more preferably from 10 to 45 percent, by weight of the composition, of the interpolymer of aliphatic α-olefin/vinylidene aromatic monomer component (3) and from 99 to 50 percent, more preferably from 90 to 55 percent, by weight of the composition, of the elastomer block copolymer component (A). For the compositions containing at the most 50 weight percent of interpolymer of aliphatic α-olefin/vinylidene aromatic monomer component (B), the compositions maintain a reasonably low Shore A hardness ( 65 or lower) as well as a fairly constant peak tensile stress, which are desirable properties for elastomeric materials.

For the blend compositions in which the monovinylidene aromatic monomer component of the aliphatic α-olefin/monovinylidene aromatic interpolymer component is present in an amount of amount of from 17 to 65 mole %, preferably from 20 to 65 mole % in said interpolymer, and fabricated articles made from such composition and said interpolymer is present in the blend at a concentration of 25 wt%, then the % stress relaxation of the blends is ≥ 38%. Further for the blend compositions in which the monovinylidene aromatic monomer component of the aliphatic α-olefin/monovinylidene aromatic interpolymer component is present in an amount of from 17 to 65 mole %, preferably in an amount of from 20 to 65 mole % and said interpolymer is present in the blend at a concentration of 75 wt%, then the % stress relaxation of the blends is ≥ 65%.

Also for the blend compositions in which the monovinylidene aromatic monomer component of the aliphatic α-olefin/monovinylidene aromatic interpolymer component is present in an amount of from 0.5 to 15 mol% and said interpolymer is present in the blend at a concentration of 25 wt%, then the Ultimate tensile of the blends is ≥ 21 MPa. Further for the blend compositions in which the monovinylidene aromatic monomer component of the aliphatic α-olefin/monovinylidene aromatic interpolymer component is present in an amount of from 0.5 to 15 mol% and said interpolymer is present in the blend at a concentration of 75 wt%, then the then the Ultimate tensile of the blends is ≥ 15 MPa

Additives such as antioxidants (for example , hindered phenolics (for example, Irganox® 1010), phosphites (for example, Irgafos® 168)), cling additives (for example, PIB), antiblock additives, colourants, pigments, fillers, and the like can also be included in the present compositions, to the extent that they do not interfere with the enhanced properties discovered by Applicants.

The compositions of the present invention are compounded by any convenient method, including dry blending the individual components and subsequently melt mixing, either directly in the extruder or mill used to make the finished article (for example, the automotive part), or by pre-melt mixing in a separate extruder or mill (for example, a Banbury mixer).

There are many types of molding operations which can be used to form useful fabricated articles or parts from the present compositions, including various injection molding processes (for example, that described in Modern Plastics Encyclopedia/89, Mid October 1988 Issue, Volume 65, Number 11, pp. 264-268, "Introduction to Injection Molding" and on pp. 270-271, "Injection Molding Thermoplastics") and blow molding processes (for example, that described in Modern Plastics Encyclopedia/89, Mid October 1988 Issue, Volume 65, Number 11, pp. 217-218, "Extrusion-Blow Molding") and profile extrusion. Some of the fabricated articles include sports articles, containers such as for food or other household articles, footware, automotive articles, such as soft facia, sealants and assembly adhesives.

The compositions of the present invention can be further combined with many thermoplastic polymers to improve their properties, such as impact properties.

The compositions of the present invention are useful as tubing, tapes, adhesives, film, gaskets. The compositions of the present invention are especially useful for the preparation of elastic films and fibres, asphalt blends, wire and cable, sound barriers, wax blends, pressure sensitive adhesives and in the impact modification of thermoplastics.

The invention will be further illustrated by means of the following examples.

The properties are obtained by the following procedures. Density is provided by the manufacturer or obtained by ASTM D 792. Wt. Percent Styrene is obtained by H¹ NMR.

The following components are employed in the Examples and Comparative Experiments.

### GENERAL PROCEDURE A FOR PREPARATION OF ETHYLENE/STYRENE COPOLYMERS A-E

Polymer is prepared in a 1 gallon agitated semi-continuous batch reactor. The reaction mixture generally consisted of a solvent comprising cyclohexane or Isopar-E™, and styrene. Prior to addition, solvent, styrene and ethylene are purified to remove water and oxygen. The inhibitor in the styrene is also removed. Inerts are removed by purging the vessel with ethylene. The vessel is then pressure controlled to a set point with ethylene. Hydrogen is added by filling a 70 cc cylinder to a set pressure and then adding it to the reactor to control molecular weight. Temperature in the vessel is controlled to set-point by varying the cooling flow of the cooling coils within the vessel. Prior to polymerization, the vessel is heated to the desired run temperature and the catalyst components:Titanium (N-1,1-dimethylethy)dimethyl(1-(1,2,3,4,5-η)-2,3,4,5,-tetramethyl- 2,4-cyclopentadien-1-yl)silanaminato))(2-)N)-dimethyl, CAS#135072-62-7, Tris(pentafluorophenyl)boron, CAS#001109-15-5, Modified methylaluminoxane Type 3A, CAS# 146905-79-5, are combined in mole ratios as shown and added to the vessel. After starting, the polymerization is allowed to proceed with ethylene supplied to the reactor as required to maintain vessel pressure. In some cases, hydrogen is added to the headspace of the reactor to maintain a mole ratio with respect to the ethylene concentration. At the end of the run, about 1,000 ppm of Irganox™ 1010 anti-oxidant is then added to the solution on a polymer basis and the polymer is isolated from the solution by precipitation with methanol. The resulting polymers are dried in a vacuum oven. The following Table 1 contains the reactor conditions.

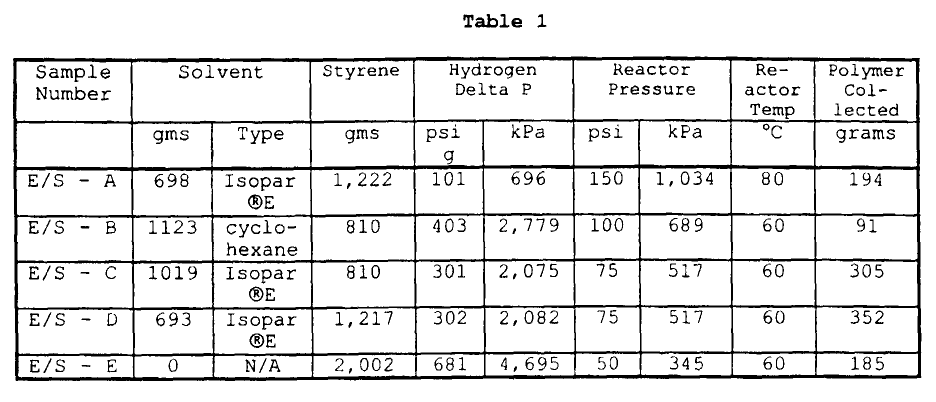

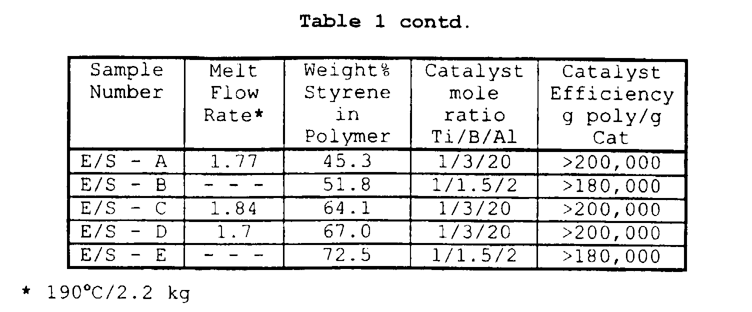

### GENERAL PROCEDURE B FOR PREPARATION OF ETHYLENE/STYRENE COPOLYMERS F-H

ES1 Catalyst (dimethyl[N-(1,1-dimethylethyl)-1,1-dimethyl-1-[(1,2,3,9,5-η)-1,5,6,7-tetrahydro-3-phenyl-s-indacen-1-yl]silanaminato(2-)-N]- titanium) Preparation.

### Preparation of 3,5,6,7-Tetrahydro-s-Hydrindacen-1(2H)-one.

Indan (94.00 g, 0.7954 moles) and 3-chloropropionyl chloride (100.99 g, 0.7954 moles) were stirred in CH₂Cl₂ (300 mL) at 0°C as AlCl₃ (130.00 g, 0.9750 moles) was added slowly under a nitrogen flow. The mixture was then allowed to stir at room temperature for 2 hours. The volatiles were then removed. The mixture was then cooled to O°C and concentrated H₂SO₄ (500 mL) slowly added. The forming solid had to be frequently broken up with a spatula as stirring was lost early in this step. The mixture was then left under nitrogen overnight at room temperature. The mixture was then heated until the temperature readings reached 90°C. These conditions were maintained for a 2 hour period of time during which a spatula was periodically used to stir the mixture. After the reaction period crushed ice was placed in the mixture and moved around. The mixture was then transferred to a beaker and washed intermittently with H₂O and diethylether and then the fractions filtered and combined. The mixture was washed with H₂O (2 x 200 mL). The organic layer was then separated and the volatiles removed. The desired product was then isolated via recrystallization from hexane at 0°C as pale yellow crystals (22.36 g, 16.3% yield).
¹H NMR (CDCl₃); d2.04-2.19 (m, 2 H), 2.65 (t, ³J_{HH}=5.7 Hz, 2 H), 2.84-3.0 (m, 4 H), 3.03 (t, ³J_{HH}=5.5 Hz, 2 H), 7.26 (s, 1 H), 7.53 (s, 1 H).
¹³C NMR (CDCl₃): d25.71, 26.01, 32.19, 33.24, 36.93, 118.90, 122.16, 135.88, 144.06, 152.89, 154.36, 206.50.
GC-MS: Calculated for C₁₂H₁₂O 172.09, found 172.05.

### Preparation of 1,2,3,5-Tetrahydro-7-phenyl-s-indacen.

3,5,6,7-Tetrahydro-s-Hydrindacen-1(2H)-one (12.00 g, 0.06967 moles) was stirred in diethylether (200 mL) at 0°C as PhMgBr (0.105 moles, 35.00 mL of 3.0 M solution in diethylether) was added slowly. This mixture was then allowed to stir overnight at room temperature. After the reaction period the mixture was quenched by pouring over ice. The mixture was then acidified (pH=1) with HCl and stirred vigorously for 2 hours. The organic layer was then separated and washed with H₂O (2 x 100 mL) and then dried over MgSO₄. Filtration followed by the removal of the volatiles resulted in the isolation of the desired product as a dark oil (14.68 g, 90.3% yield).
¹H NMR (CDCl₃): d2.0-2.2 (m, 2 H), 2.8-3.1 (m, 4 H), 6.54 (s, 1H), 7.2-7.6 (m, 7 H).
GC-MS: Calculated for C₁₈H₁₆ 232.13, found 232.05.

### Preparation of 1,2,3,5-Tetrahydro-7-phenyl-s-indacene, dilithium salt.

1,2,3,5-Tetrahydro-7-phenyl-s-indacen (14.68 g, 0.06291 moles) was stirred in hexane (150 mL) as nBuLi (0.080 moles, 40.00 mL of 2.0 M solution in cyclohexane) was slowly added. This mixture was then allowed to stir overnight. After the reaction period the solid was collected via suction filtration as a yellow solid which was washed with hexane, dried under vacuum, and used without further purification or analysis (12.2075 g, 81.1% yield).

### Preparation of Chlorodimethyl(1,5,6,7-tetrahydro-3-phenyl-s-indacen-1-yl)silane.

1,2,3,5-Tetrahydro-7-phenyl-s-indacene, dilithium salt (12.2075 g, 0.05102 moles) in THF (50 mL) was added dropwise to a solution of Me₂SiCl₂ (19.5010 g, 0.1511 moles) in THF (100 mL) at 0°C. This mixture was then allowed to stir at room temperature overnight. After the reaction period the volatiles were removed and the residue extracted and filtered using hexane. The removal of the hexane resulted in the isolation of the desired product as a yellow oil (15.1492 g, 91.1% yield).
¹H NMR (CDCl₃): d0.33 (s, 3 H), 0.38 (s, 3 H), 2.20 (p, ³J_{HH}=7.5 Hz, 2 H), 2.9-3.1 (m, 4 H), 3.84 (s, 1 H), 6.69 (d, ³J_{HH}=2.8 Hz, 1 H), 7.3-7.6 (m, 7 H), 7.68 (d, ³J_{HH}=7.4 Hz, 2 H).
¹³C NMR (CDCl₃): d0.24, 0.38, 26.28, 33.05, 33.18, 46.13, 116.42, 119.71, 127.51, 128.33, 128.64, 129.56, 136.51, 141.31, 141.86, 142.17, 142.41, 144.62.
GC-MS: Calculated for C₂₀H₂₁ClSi 324.11, found 324.05.

### Preparation of N-(1,1-Dimethylethyl)-1,1-dimethyl-1-(1,5,6,7-tetrahydro-3-phenyl-s-indacen-1-yl)silanamine.

Chlorodimethyl(1,5,6,7-tetrahydro-3-phenyl-s-indacen-1-yl)silane (10.8277 g, 0.03322 moles) was stirred in hexane (150 mL) as NEt3 (3.5123 g, 0.03471 moles) and t-butylamine (2.6074 g, 0.03565 moles) were added. This mixture was allowed to stir for 24 hours. After the reaction period the mixture was filtered and the volatiles removed resulting in the isolation of the desired product as a thick red-yellow oil (10.6551 g, 88.7% yield).
¹H NMR (CDCl₃): d0.02 (s, 3 H), 0.04 (s, 3 H), 1.27 (s, 9 H), 2.16 (p, ³J_{HH}=7.2 Hz, 2 H), 2.9-3.0 (m, 4 H), 3.68 (s, 1 H), 6.69 (s, 1 H), 7.3-7.5 (m, 4 H), 7.63 (d, ³J_{HH}=7.4 Hz, 2 H).
¹³C NMR (CDCl₃): d-0.32, -0.09, 26.28, 33.39, 34.11, 46.46, 47.54, 49.81, 115.80, 119.30, 126.92, 127.89, 128.46, 132.99, 137.30, 140.20, 140.81, 141.64, 142.08, 144.83.

### Preparation of N-(1,1-Dimethylethyl)-1,1-dimethyl-1-(1,5,6,7-tetrahydro-3-phenyl-s-indacen-l-yl)silanamine, dilithium salt.

N-(1,1-Dimethylethyl)-1,1-dimethyl-1-(1,5,6,7-tetrahydro-3-phenyl-s-indacen-1-yl)silanamine (10.6551 g, 0.02947 moles) was stirred in hexane (100 mL) as nBuLi (0.070 moles, 35.00 mL of 2.0 M solution in cyclohexane) was added slowly. This mixture was then allowed to stir overnight during which time no salts crashed out of the dark red solution. After the reaction period the volatiles were removed and the residue quickly washed with hexane (2 x 50 mL). The dark red residue was then pumped dry and used without further purification or analysis (9.6517 g, 87.7% yield).

### Preparation of Dichloro[N-(1,1-dimethylethyl)-1,1-dimethyl-1-[(1,2,3,9,5-η)-1,5,6,7-tetrahydro-3-phenyl-s-indacen-1-yl]silanaminato(2-)-N]titanium.

N-(1,1-Dimethylethyl)-1,1-dimethyl-1-(1,5,6,7-tetrahydro-3-phenyl-s-indacen-1-yl)silanamine, dilithium salt (4.5355 g, 0.01214 moles) in THF (50 mL) was added dropwise to a slurry of TiCl₃(THF)₃ (4.5005 g, 0.01214 moles) in THF (100 mL). This mixture was allowed to stir for 2 hours. PbCl₂ (1.7136 g, 0.006162 moles) was then added and the mixture allowed to stir for an additional hour. After the reaction period the volatiles were removed and the residue extracted and filtered using toluene. Removal of the toluene resulted in the isolation of a dark residue. This residue was then slurried in hexane and cooled to 0°C. The desired product was then isolated via filtration as a red-brown crystalline solid (2.5280 g, 43.5% yield).
¹H NMR (CDCl₃): d0.71 (s, 3 H), 0.97 (s, 3 H), 1.37 (s, 9 H), 2.0-2.2 (m, 2 H), 2.9-3.2 (m, 4 H), 6.62 (s, 1 H), 7.35-7.45 (m, 1 H), 7.50 (t, ³J_{HH}=7.8 Hz, 2 H), 7.57 (s, 1 H), 7.70 (d, ³J_{HH}=7.1 Hz, 2 H), 7.78 (s, 1 H).
¹H NMR (C₆D₆): d0.44 (s, 3 H), 0.68 (s, 3 H), 1.35 (s, 9 H), 1.6-1.9 (m, 2 H), 2.5-3.9 (m, 4 H), 6.65 (s, 1 H), 7.1-7.2 (m, 1 H), 7.24 (t, ³J_{HH}=7.1 Hz, 2 H), 7.61 (s, 1 H), 7.69 (s, 1 H), 7.77-7.8 (m, 2 H). ¹³C NMR (CDCl₃): d1.29, 3.89, 26.47, 32.62, 32.84, 32.92, 63.16, 98.25, 118.70, 121.75, 125.62, 128.46, 128.55, 128.79, 129.01, 134.11, 134.53, 136.04, 146.15, 148.93.
¹³C NMR (C₆D₆): d0.90, 3.57, 26.46, 32.56, 32.78, 62.88, 98.14, 119.19, 121.97, 125.84, 127.15, 128.83, 129.03, 129.55, 134.57, 135.04, 136.41, 136.51, 147.24, 148.96.

### Preparation of Dimethyl [N-(1,1-dimethylethyl)-1,1-dimethyl-1-[(1,2,3,4,5-η)-1,5,6,7-tetrahydro-3-phenyl-s-indacen-1-yl]silanaminato(2-)-N]titanium.

Dichloro[N-(1,1-dimethylethyl)-1,1-dimethyl-1-[(1,2,3,4,5-η)-1,5,6,7-tetrahydro-3-phenyl-s-indacen-1-yl]silanaminato(2-)-N]titanium (0.4970 g, 0.001039 moles) was stirred in diethylether (50 mL) as MeMgBr (0.0021 moles, 0.70 mL of 3.0 M solution in diethylether) was added slowly. This mixture was then stirred for 1 hour. After the reaction period the volatiles were removed and the residue extracted and filtered using hexane. Removal of the hexane resulted in the isolation of the desired product as a golden yellow solid (0.4546 g, 66.7% yield).
¹H NMR (C₆D₆): d0.071 (s, 3 H), 0.49 (s, 3 H), 0.70 (s, 3 H), 0.73 (s, 3 H), 1.49 (s, 9 H), 1.7-1.8 (m, 2 H), 2.5-2.8 (m, 4 H), 6.41 (s, 1 H), 7.29 (t, ³J_{HH}=7.4 Hz, 2 H), 7.48 (s, 1 H), 7.72 (d, ³J_{HH}=7.4 Hz, 2 H), 7.92 (s, 1 H).
¹³C NMR (C₆D₆): d2.19, 4.61, 27.12, 32.86, 33.00, 34.73, 58.68, 58.82, 118.62, 121.98, 124.26, 127.32, 128.63, 128.98, 131.23, 134.39, 136.38, 143.19, 144.85.

### Cocatalyst (bis(hydrogenated-tallowalkyl)methylamine) (B-FABA) Preparation.

Methylcyclohexane (1200 mL) was placed in a 2L cylindrical flask. While stirring, bis(hydrogenated-tallowalkyl)methylamine (ARMEEN® M2HT, 104 g, ground to a granular form) was added to the flask and stirred until completely dissolved. Aqueous HCl (1M, 200 mL) was added to the flask, and the mixture was stirred for 30 minutes. A white precipitate formed immediately. At the end of this time, LiB(C₆F₅)₄ • Et₂O • 3 LiCl (MW = 887.3; 177.4 g) was added to the flask. The solution began to turn milky white. The flask was equipped with a 6" Vigreux column topped with a distillation apparatus and the mixture was heated (140 °C external wall temperature). A mixture of ether and methylcyclohexane was distilled from the flask. The two-phase solution was now only slightly hazy. The mixture was allowed to cool to room temperature, and the contents were placed in a 4 L separatory funnel. The aqueous layer was removed and discarded, and the organic layer was washed twice with H20 and the aqueous layers again discarded. The H₂O saturated methylcyclohexane solutions were measured to contain 0.48 wt percent diethylether (Et₂O).

The solution (600 mL) was transferred into a 1 L flask, sparged thoroughly with nitrogen, and transferred into the drybox. The solution was passed through a column (1" diameter, 6" height) containing 13X molecular sieves. This reduced the level of Et₂O from 0.48 wt percent to 0.28 wt percent. The material was then stirred over fresh 13X sieves (20 g) for four hours. The Et₂O level was then measured to be 0.19 wt percent. The mixture was then stirred overnight, resulting in a further reduction in Et₂O level to approximately 40 ppm. The mixture was filtered using a funnel equipped with a glass frit having a pore size of 10-15 µm to give a clear solution (the molecular sieves were rinsed with additional dry methylcyclohexane). The concentration was measured by gravimetric analysis yielding a value of 16.7 wt percent.

### Polymerization

Ethylene/styrene copolymers F-H were prepared in a 6 gallon (22.7 L), oil jacketed, Autoclave continuously stirred tank reactor (CSTR). A magnetically coupled agitator with Lightning A-320 impellers provided the mixing. The reactor ran liquid full at 475 psig (3,275 kPa). Process flow was in at the bottom and out of the top. A heat transfer oil was circulated through the jacket of the reactor to remove some of the heat of reaction. At the exit of the reactor was a micromotion flow meter that measured flow and solution density. All lines on the exit of the reactor were traced with 50 psi (344.7 kPa) steam and insulated.

Ethylbenzene solvent was supplied to the reactor at 30 psig (207 kPa). The feed to the reactor was measured by a Micro-Motion mass flow meter. A variable speed diaphragm pump controlled the feed rate. At the discharge of the solvent pump, a side stream was taken to provide flush flows for the catalyst injection line (1 lb/hr (0.45 kg/hr)) and the reactor agitator (0.75 lb/hr ( 0.34 kg/ hr)). These flows were measured by differential pressure flow meters and controlled by manual adjustment of micro-flow needle valves. Uninhibited styrene monomer was supplied to the reactor at 30 psig (207 kpa). The feed to the reactor was measured by a Micro-Motion mass flow meter. A variable speed diaphragm pump controlled the feed rate. The styrene streams was mixed with the remaining solvent stream. Ethylene was supplied to the reactor at 600 psig (4,137 kPa). The ethylene stream was measured by a Micro-Motion mass flow meter just prior to the Research valve controlling flow. A Brooks flow meter/controller was used to deliver hydrogen into the ethylene stream at the outlet of the ethylene control valve. The ethylene/hydrogen mixture combines with the solvent/styrene stream at ambient temperature. The temperature of the solvent/monomer as it enters the reactor was dropped to ∼5 °C by an exchanger with -5°C glycol on the jacket. This stream entered the bottom of the reactor. The three component catalyst system and its solvent flush also entered the reactor at the bottom but through a different port than the monomer stream. Preparation of the catalyst components took place in an inert atmosphere glove box. The diluted components were put in nitrogen padded cylinders and charged to the catalyst run tanks in the process area. From these run tanks the catalyst was pressured up with piston pumps and the flow was measured with Micro-Motion mass flow meters. These streams combine with each other and the catalyst flush solvent just prior to entry through a single injection line into the reactor.

Polymerization was stopped with the addition of catalyst kill (water mixed with solvent) into the reactor product line after the micromotion flow meter measuring the solution density. Other polymer additives can be added with the catalyst kill. A static mixer in the line provided dispersion of the catalyst kill and additives in the reactor effluent stream. This stream next entered post reactor heaters that provide additional energy for the solvent removal flash. This flash occurred as the effluent exited the post reactor heater and the pressure was dropped from 475 psig (3,275 kPa) down to ∼250mm of pressure absolute at the reactor pressure control valve. This flashed polymer entered a hot oil jacketed devolatilizer. Approximately 85 percent of the volatiles were removed from the polymer in the devolatilizer. The volatiles exited the top of the devolatilizer. The stream was condensed with a glycol jacketed exchanger and entered the suction of a vacuum pump and was discharged to a glycol jacket solvent and styrene/ethylene separation vessel. Solvent and styrene were removed from the bottom of the vessel and ethylene from the top. The ethylene stream was measured with a Micro-Motion mass flow meter and analyzed for composition. The measurement of vented ethylene plus a calculation of the dissolved gasses in the solvent/styrene stream were used to calculate the ethylene conversion. The polymer separated in the devolatilizer was pumped out with a gear pump to a ZSK-30 devolatilizing vacuum extruder. The dry polymer exits the extruder as a single strand. This strand was cooled as it was pulled through a water bath. The excess water was blown from the strand with air and the strand was chopped into pellets with a strand chopper.

The actual preparation conditions for each sample are summarized in Table 2.

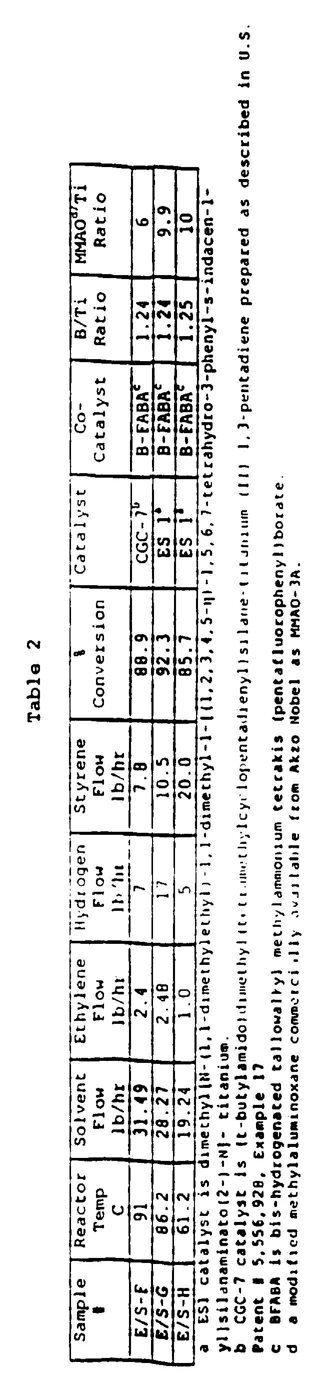

### ETHYLENE/STYRENE COPOLYMER A (45.3 wt percent; 18.3 mole percent styrene)

See General Procedure A. The resulting ethylene/styrene interpolymer had the following properties: weight percent styrene = 45.3; mole percent styrene = 18.3; density = 0.956; melt flow rate (190°C, 2.2 Kg) = 1.77; heat of fusion = 23.6 J/g; glass transition temperature (DSC derived) = 17.2°C.

### ETHYLENE/STYRENE COPOLYMER B (51.8 wt percent; 22.5 mole percent styrene)

See General Procedure A. The resulting ethylene/styrene interpolymer had the following properties: weight percent styrene = 51.8; mole percent styrene = 22.5.

### ETHYLENE/STYRENE COPOLYMER C (64.1 wt percent; 32.5 mole percent styrene)

See General Procedure A. The resulting ethylene/styrene interpolymer had the following properties: weight percent styrene = 64.1; mole percent styrene = 32.5; density = .0982; melt flow rate (190°C, 2.2 Kg) = 1.84; glass transition temperature (DSC derived) =-4.6°C.

### ETHYLENE/STYRENE COPOLYMER D (67.0 wt percent; 35.4 mole percent styrene)

See General Procedure A. The resulting ethylene/styrene interpolymer had the following properties: weight percent styrene = 67.0; mole percent styrene = 35.4; density = 0.996; melt flow rate (190°C, 2.2 Kg) = 1.7; glass transition temperature (DSC derived) =-3°C.

### ETHYLENE/STYRENE COPOLYMER E (72.5 wt percent; 41.6 mole percent styrene)

See General Procedure A. The resulting ethylene/styrene interpolymer had the following properties: weight percent styrene = 72.5; mole percent styrene = 41.6

### ETHYLENE/STYRENE COPOLYMER F (28.8 wt percent; 9.82 mole percent styrene)

See General Procedure B. The resulting ethylene/styrene interpolymer had the following properties: weight percent styrene = 28.8; mole percent styrene = 9.82; melt flow rate (190°C, 2.2 Kg) = 1.0. Further properties are shown in Table 2.

### ETHYLENE/STYRENE COPOLYMER G (52.4 wt percent; 22.86 mole percent styrene)

See General Procedure B. The resulting ethylene/styrene interpolymer had the following properties: weight percent styrene = 52.4; mole percent styrene = 22.86; melt flow rate (190°C, 2.2 Kg) = 1.1. Further properties are shown in Table 2.

### ETHYLENE/STYRENE COPOLYMER H (73.3 wt percent; 42.5 mole percent styrene)

See General Procedure B. The resulting ethylene/styrene interpolymer had the following properties: weight percent styrene = 73.3; mole percent styrene = 42.5; melt flow rate (190°C, 2.2 Kg) = 2.2. Further properties are shown in Table 2.
POLYOLEFIN A is a high density polyethylene available from The Dow Chemical Company as HD 4352N having the following properties: density = 0.9508 g/cm³; melt flow rate (200°C/5 kg) = 12.4.
POLYOLEFIN B is an ethylene/octene copolymer available from The Dow Chemical Company as DOWLEX® 20474A having the following properties: density = 0.9178 g/cm³; melt flow rate (200°C/5 kg) = 7.2.
BLOCK COPOLYMER A is VECTOR™ 4211-D available from Dexco Polymers which is a Styrene-Isoprene-Styrene block copolymer containing 29.6 wt. percent styrene and 70.4 wt. percent isoprene having the following properties: melt flow rate (200°C/5 kg) of 10.6 g/10 min.
BLOCK COPOLYMER B is VECTOR™ 8508-D available from Dexco Polymers which is a Styrene-Butadiene-Styrene block copolymer containing 28.5 wt. percent styrene and 71.5 wt. percent isoprene having the following properties: melt flow rate (200°C/5 kg) of 12.2 g/10 min.
BLOCK COPOLYMER C is VECTOR™ 7400-D available from Dexco Polymers which is a Styrene-Butadiene-Styrene block copolymer with a molar ratio styrene/butadiene of 31.8/68.2 having the following properties: melt flow rate (200°C/5 kg) of 17.3 g/10 min. and an oil content of 33.3 percent by weight.
BLOCK COPOLYMER D is KRATON™ G 1652 available from Shell Chemical Company which is a styrene-ethylene/butylene-styrene triblock copolymer containing 29 wt. percent styrene and 71 wt. percent ethylene/butylene.

### EXAMPLES 1 - 19 AND COMPARATIVE EXPERIMENTS A - D

### A. Preparation of Blend of Component A and Component B.

A compression molding press (PHI Model SB234C-X-MS-X24) was preheated to 175°C - 200°C. A chase system consisting of stainless steel backing plates, TEFLON™ TFE-coated glass film sheets, and a metal chase of approximately 64 mm high by 191 mm wide by 3.18 mm thick was prepared. Into the chase was evenly spread an amount of Block Copolymer pellets (Component A) indicated in Table 3. From a slab of Component (B) was cut an amount of polymer indicated in Table 3 which was evenly distributed in the chase on top of the block polymer. A layered structure with TFE coated sheets was formed next to the polymer. The sandwich was preheated in the press at near minimum pressure for approximately one minute, then pressure of the press was increased to about 20,000 Kg of ram force for 10 seconds. The chase and the fused blend was removed when cooled to sufficient rigidity. The still warm blend was placed onto an operating roll mill (155°C) for 2 minutes total. The blend was temporarily removed, folded, and replaced on the mill at least twice. The blend was removed from the roll mill and allowed to cool. This material was used for further fabrication.

### B. Preparation of Test Sample.

A compression molding press (PHI Model SB234 C-X-MS-X24) was preheated to 200°C. A 7.0 gram portion of the blend from A above was evenly distributed into a 75 mm wide by 115 mm high by 0.94 mm thick chase layered between TFE-coated glass sheets and metal backing plates. The following temperature program was followed: preheat 3.0 minutes at minimal pressure; medium force 0.5 minutes (10,000 Kg ram force); material cure 3.0 minutes (20,000 Kg ram force).

### C. Preparation of Test Sample.

A compression molded circle was prepared from another portion of the roll-milled blanket prepared in A above in a manner similar to the first sheet prepared in B above except that 14.0 grams of blend are used in a chase which has 76 mm diameter circles and which was approximately 3.2 mm thick. Circles are cut in half and doubled to required thickness for Shore A testing.

### D. Testing of Samples prepared in (B) above.

The test specimens are stored at 23°C for 24 hours or more prior to testing. Transmission haze was determined on the 0.94 mm sheets prepared in B above using a Hunterlab Tristimulus colorimeter (D25P-9) similar to ASTM D 1003. Tensile, modulus, and set specimens are die cut (Die L, ASTM D 1822) from the 0.94 mm sheets. Tensile set protocol was 150 percent elongation, hold 30 seconds, return, wait 60 seconds, measure percent tensile set, defined as {(final gauge-initial gauge)/(initial gauge)} x 100 where gauge was the length between grip jaws when force becomes apparent after removing slack.

Shore A hardness was determined by ASTM D 2240.

Force at 300 percent elongation (300 percent modulus) was determined by ASTM D 412.

Percent relaxation was as defined in ASTM D 2991-84 after extension to 150 percent elongation and is based on force value upon reaching maximum elongation and after 30 seconds.

The test results are provided in Table 3.

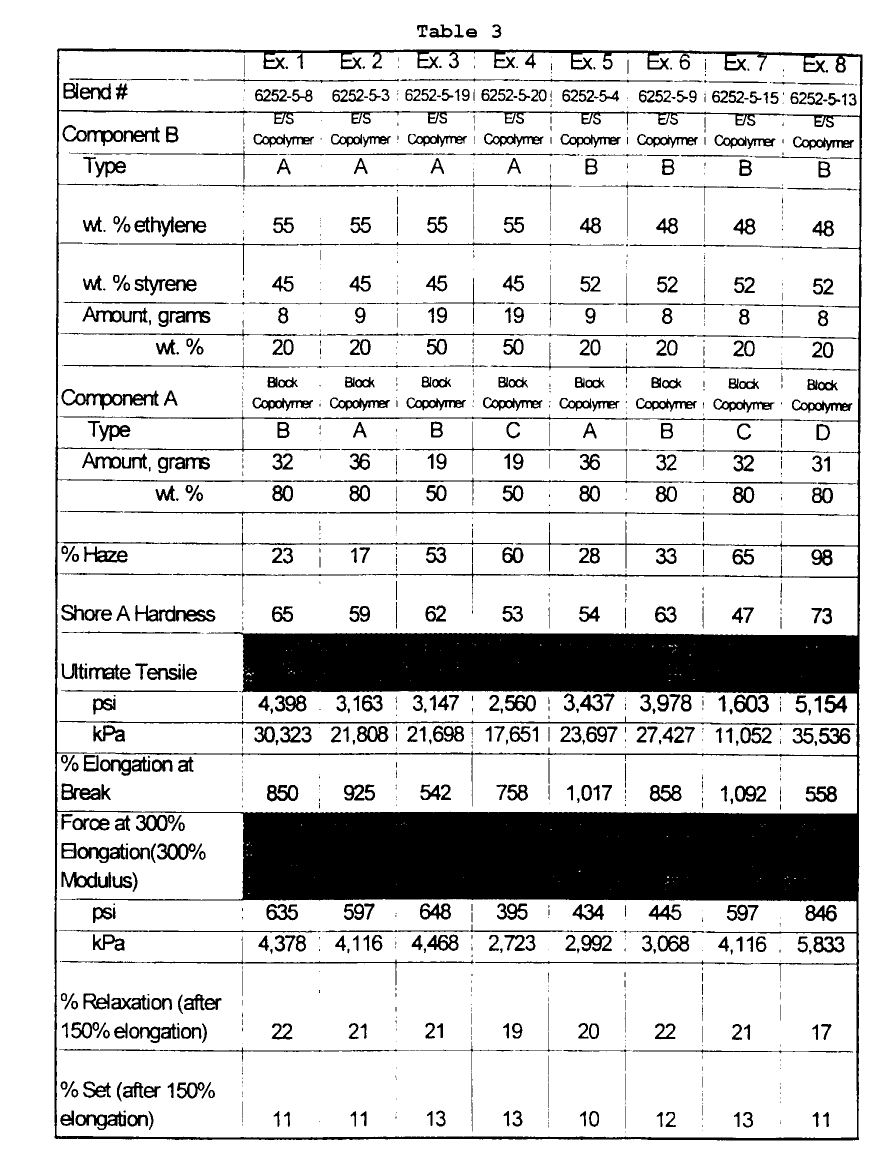

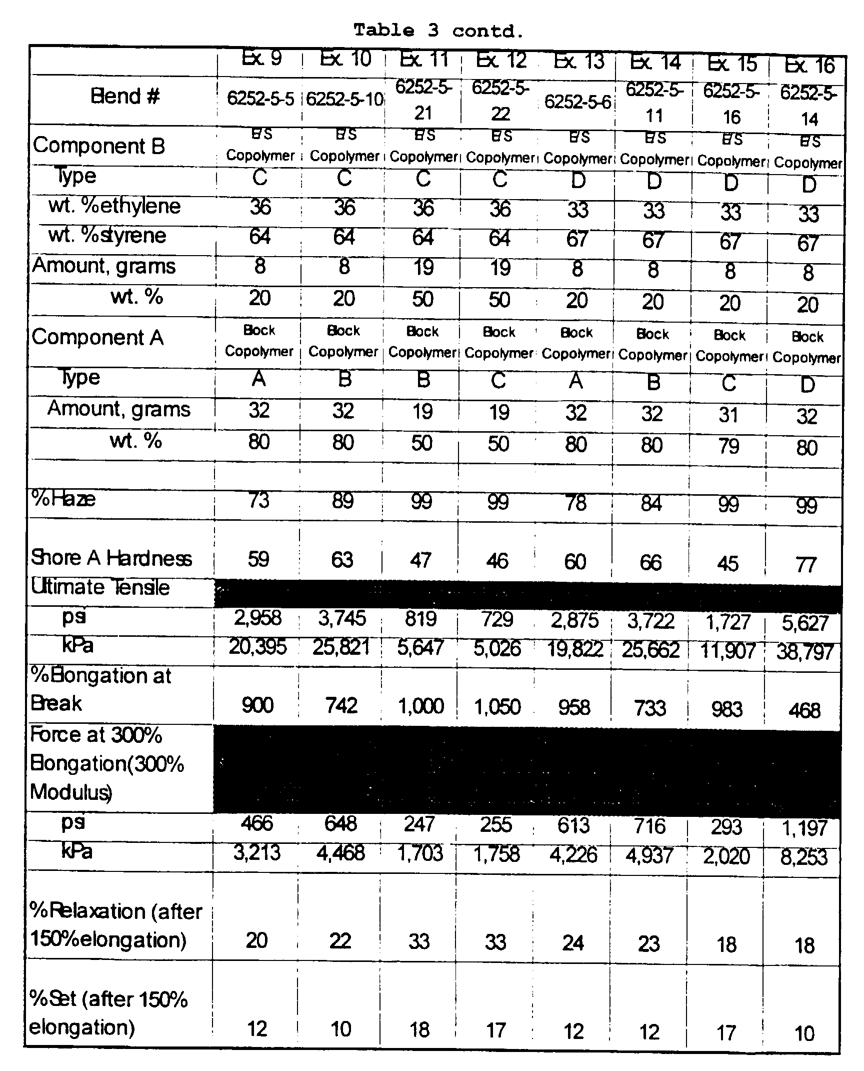

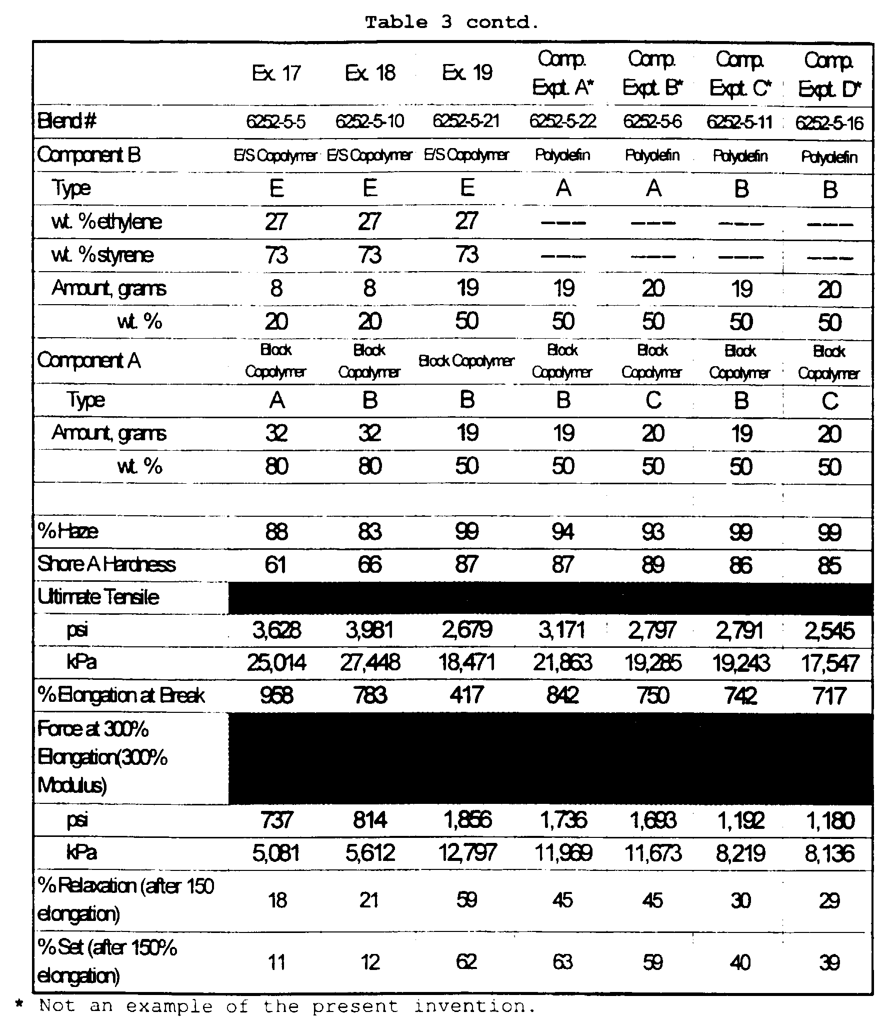

### EXAMPLES 20 - 26

a) Compression molding:
   Samples were melted at 190 °C for 3 min and compression molded at 190°C under 20,000 lb of pressure for another 2 min. Subsequently, the molten materials were quenched in a press equilibrated at room temperature.
b) Differential Scanning Calorimetry (DSC):
   A Du Pont DSC-2210 was used to measure the thermal transition temperatures and heat of transition for the samples. In order to eliminate previous thermal history, samples were first heated to about 160 °C. Heating and cooling curves were recorded at 10 °C /min. Melting (tₘ from second heat) and crystallization (t_{c}) temperatures were recorded from the peak temperatures of the endotherm and exotherm, respectively.
c) Dynamic Mechanical Spectroscopy (DMS):
   Dynamic mechanical data were generated using a Rheometrics RSA-II solid state analyzer, and melt pressed (∼ 20 mil thick) film test specimens. The DMS measurements were conducted at a step rate of 5 °C /min and a fixed frequency of 10 rad/sec. The glass transition temperature (Tg) of the samples was determined from the tan δ peak maximum.
d) Shear Rheology:
   Oscillatory shear rheology measurements were performed with a Rheometrics RMS-800 rheometer. Melt rheological properties were monitored at an isothermal set temperature of 190°C in a frequency sweep mode, using parallel plate test geometry.
e) Mechanical Testing:
   Tensile properties of the compression molded samples were measured using an Instron 1145 tensile machine equipped with an extensiometer. ASTM-D638 samples were tested at a strain rate of 5 min⁻¹. Micro-tensile samples were tested at a speed of 5 in/min at-10°C. The Youngs Modulus (E, Mpa) measured was the average of four tensile measurements was given. The standard deviation for the ultimate properties was typically about 10 % of the reported average value. Also measured was the yield stress at the inflection point of the stress strain curve (σ_{y}, Mpa) and the Ultimate Tensile stress at break (σ_{b}, Mpa).
f) Tensile stress relaxation:
   Uniaxial tensile stress relaxation was evaluated using an Instron 1145 tensile machine. Compression molded film (∼ 20 mil thick) with a 10 mil gauge length was deformed to a strain level of 50% at a strain rate of 20 min⁻¹. The force required to maintain 50% elongation was monitored for 10 min. The magnitude of the stress relaxation was defined as Sr, the percentage = (fᵢ - f_{f} / fᵢ) x 100 where fᵢ was the initial force and f_{f} was the final force.
g) Thermal Mechanical Analysis.
   Upper service temperature (TMA(lmm)) was determined from a thermal mechanical analyzer (Perkin Elmer TMA 7 series) scanned at 5 °C/min and a load of 1 Newton and defined as the point at which the probe penetrates 1 mm into the sample.

### Example 20.

Example 20 was a blend containing 75 % by weight of ESI # F and 25 % by weight of Block Copolymer D. The blend was prepared by blending in a Haake Rheomix 3000 bowl mixer. The capacity of this mixer was 310 cc. Optimum volume for effective mixing was approximately 70% or 220 cc. Calculations were made considering density and constituency of each component to prepare a dry blend of the materials to achieve a 70% volume fill. The dry blended materials were then added stepwise into the preheated calibrated bowl as the rotors were turning at 30 rpm. The materials were heated to approximately 250 degrees Centigrade. After a small melt heel was established in the mixer, small increments of dry blend were added and allowed to melt and incorporate into the heel before more blend was added. This continued for approximately two minutes until all the blend was added. A sealing ram was then lowered on to the melt bowl and the melted blend was allowed to mix by roller blade action for an additional ten minutes. At the end of this time the rotors were stopped, the mixer was dismantled, and the melt blend was removed and allowed to cool for further testing and analysis.

### Example 21.

Example 21 was a blend containing 25 % by weight of ESI # F and 75 % by weight of Block Copolymer D. The blend was prepared essentially as for Example 20.

### Example 22.

Example 22 was a blend containing 75 % by weight of ESI # G and 25 % by weight of Block Copolymer D. The blend was prepared essentially as for Example 20.

### Example 23.

Example 23 was a blend containing 50 % by weight of ESI # G and 50 % by weight of Block Copolymer D. The blend was prepared essentially as for Example 20.

### Example 24.

Example 24 was a blend containing 25 % by weight of ESI # G and 75 % by weight of Block Copolymer D. The blend was prepared essentially as for Example 20.

### Example 25.

Example 25 was a blend containing 75 % by weight of ESI # H and 25 % by weight of Block Copolymer D. The blend was prepared essentially as for Example 20.

### Example 26.

Example 26 was a blend containing 25 % by weight of ESI # H and 75 % by weight of Block Copolymer D. The blend was prepared essentially as for Example 20.

The properties of the various blends are summarized in Table 4. These data illustrate that as the mole % styrene content of the ESI component of the blend increases then the % stress relaxation also increases. These data also illustrate that below approximately 22 mol % styrene content of the ESI component of the blend, as the styrene content of the ESI component of the blend decreases the Ultimate tensile value increases, whereas above approximately 22 mol % styrene content of the ESI component of the blend, as the styrene content of the ESI component of the blend increases, the Ultimate tensile value increases

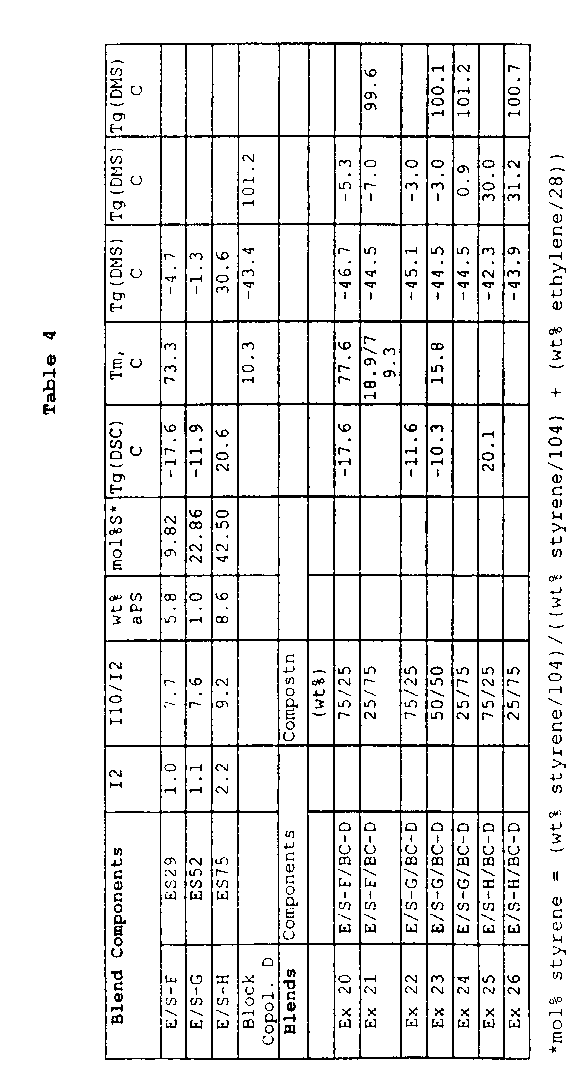

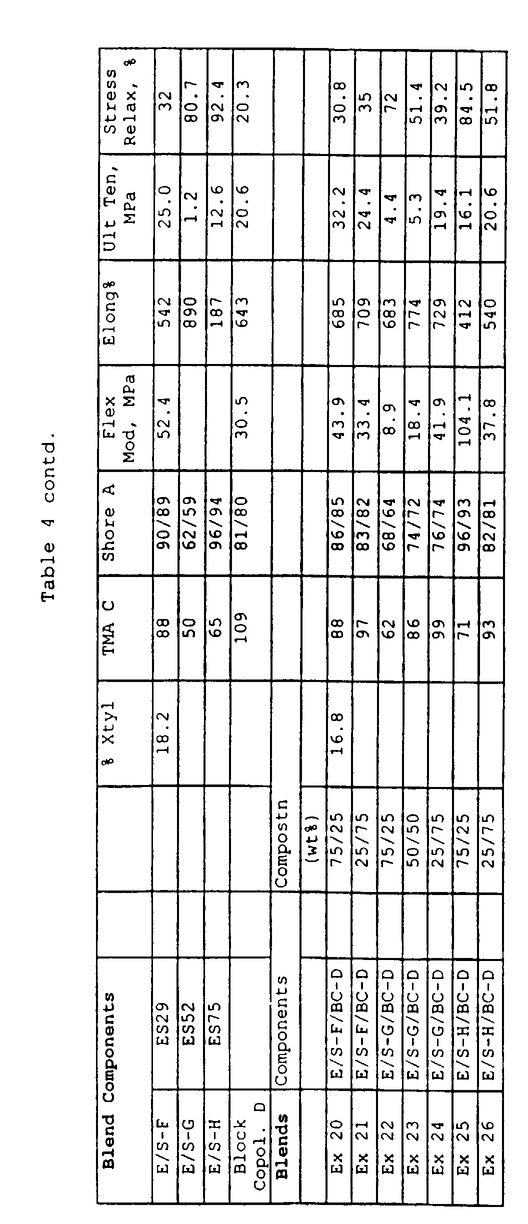

## Claims

1. A thermoplastic elastomeric blend composition consisting of:
(A) from 99 to 1 weight percent of a styrenic block copolymer; and
(B) from 1 to 99 weight percent of a substantially random interpolymer of (1) at least one aliphatic α-olefin and (2) at least one vinylidene aromatic monomer or (3) a combination of at least one vinylidene aromatic monomer and at least one hindered aliphatic vinylidene monomer, wherein said vinylidene aromatic monomer is present in an amount of from 0.5 to 15 mole percent or from 17 to 65 mole percent in said interpolymer.

2. The composition of Claim 1 wherein the elastomer block copolymer component (A) comprises at least one segment of a styrene polymer and at least one segment of the following: isoprene polymer, butadiene polymer, isoprene/butadiene copolymer, ethylene/butylene copolymer or an ethylene/propylene copolymer; and component (B) is an interpolymer of ethylene/styrene.

3. The composition of Claim 1 wherein the styrenic block copolymer component (A) comprises a polystyrene-polyisoprene-polystyrene or polystyrene-polybutadiene-polystyrene; and component (B) is an interpolymer of ethylene/styrene.

4. The composition of Claim 1 wherein the styrenic block copolymer component (A) contains from 10 to 35 weight percent of styrenic polymer segments and from 90 to 65 weight percent of elastomeric saturated olefin polymer segments, based on the total weight of the block copolymer.

5. The composition of Claim 1 wherein the styrenic block copolymer component (A) contains from 10 to 35 weight percent of styrenic polymer segments and from 90 to 65 weight percent of elastomeric unsaturated polydiene segments, based on the total weight of the block copolymer.

6. The composition of Claim 1 wherein component (B) has a heat of fusion of less than 50 J/g.

7. The composition of claim 5 having a percent tensile set after 150 percent elongation of 15 percent or less and a transmission percent haze of 60 percent or less said haze value being obtained on 0.94 mm thick sample.

8. A fabricated article made from the composition of any one of claims 1-7.

## Patentansprüche

1. Thermoplastische Elastomergemischzusammensetzung bestehend aus:
(A) von 99 bis 1 Gew.-% eines styrolischen Blockcopolymers; und
(B) von 1 bis 99 Gew.-% eines im wesentlichen statistischen Interpolymers aus (1) mindestens einem aliphatischen α-Olefin und (2) mindestens einem vinylidenaromatischen Monomer oder (3) einer Kombination aus mindestens einem vinylidenaromatischen Monomer und mindestens einem gehinderten aliphatischen Vinylidenmonomer, worin das vinylidenaromatische Monomer in einer Menge von 0,5 bis 15 Mol-% oder von 17 bis 65 Mol-% in dem Interpolymer vorliegt.

2. Zusammensetzung nach Anspruch 1, worin die Elastomerblockcopolymerkomponente (A) mindestens ein Segment aus einem Styrolpolymer und mindestens ein Segment der folgenden umfaßt: Isoprenpolymer, Butadienpolymer, Isopren/Butadiencopolymer, Ethylen/Butylencopolymer oder ein Ethylen/Propylencopolymer; und worin Komponente (B) ein Interpolymer von Ethylen/Styrol ist.

3. Zusammensetzung nach Anspruch 1, worin die styrolische Blockcopolymerkomponente (A) ein Polystyrol-Polyisopren-Polystyrol oder Polystyrol-Polybutadien-Polystyrol umfaßt und Komponente (B) ein Interpolymer von Ethylen/Styrol ist.

4. Zusammensetzung nach Anspruch 1, worin die styrolische Blockcopolymerkomponente (A) von 10 bis 35 Gew.-% styrolische Polymersegmente und von 90 bis 65 Gew.-% elastomere gesättigte Olefinpolymersegmente, basierend auf dem Gesamtgewicht des Blockcopolymers, enthält.

5. Zusammensetzung nach Anspruch 1, worin die styrolische Blockcopolymerkomponente (A) von 10 bis 35 Gew.-% styrolische Polymersegmente und von 90 bis 65 Gew.-% elastomere ungesättigte Polydiensegmente, basierend auf dem Gesamtgewicht des Blockcopolymers, enthält.

6. Zusammensetzung nach Anspruch 1, worin Komponente (B) eine Schmelzwärme von weniger als 50 J/g aufweist.

7. Zusammensetzung nach Anspruch 5 mit einem prozentualen Zugverformungsrest nach 150 Prozent Dehnung von 15 % oder weniger und einer prozentualen Transmissionstrübung von 60 % oder weniger, wobei der Trübungswert mit einer 0,94 mm dicken Probe erhalten wird.

8. Gefertigter Gegenstand, hergestellt aus der Zusammensetzung nach einem der Ansprüche 1-7.

## Revendications

1. Composition à base d'un mélange thermoplastique élastomère comprenant :
A) de 99 à 1 % en poids d'un copolymère séquencé styrénique ; et
B) de 1 à 99 % en poids d'un interpolymère pratiquement statistique de (1) au moins une α-oléfine aliphatique et (2) au moins un monomère vinylidène aromatique ou (3) une combinaison d'au moins un monomère vinylidène aromatique et d'au moins un monomère vinylidène aliphatique encombré, dans laquelle ledit monomère vinylidène aromatique est présent en une quantité de 0,5 à 15 % en moles ou de 17 à 65 % en moles dans ledit interpolymère.

2. Composition selon la revendication 1, dans laquelle le composant de copolymère séquencé élastomère (A) comprend au moins un segment de polystyrène et au moins un segment parmi les suivants : polyisoprène, polybutadiène, copolymère isoprène/butadiène, copolymère éthylène/ butylène ou copolymère éthylène/propylène ; et le composant (B) est un interpolymère éthylène/styrène.

3. Composition selon la revendication 1, dans laquelle le composant de copolymère séquencé styrénique (A) comprend le polystyrène-polyisoprène-polystyrène ou le polystyrène-polybutadiène-polystyrène ; et le composant (B) est un interpolymère éthylène/styrène.

4. Composition selon la revendication 1, dans laquelle le composant de copolymère séquencé styrénique (A) contient de 10 à 35 % en poids de segments polystyrène et de 90 à 65 % en poids de segments polyoléfine élastomère saturée, sur la base du poids total du copolymère séquencé.

5. Composition selon la revendication 1, dans laquelle le composant de copolymère séquencé styrénique (A) contient de 10 à 35 % en poids de segments polystyrène et de 90 à 65 % en poids de segments d'un polydiène élastomère insaturé, sur la base du poids total du copolymère séquencé.

6. Composition selon la revendication 1, dans laquelle le composant (B) a une chaleur de fusion inférieure à 50 J/g.

7. Composition selon la revendication 5 présentant un pourcentage de déformation résiduelle sous traction, après un allongement à 150 %, de 15 % ou moins et un voile en % de transmission de 60 % ou moins, ladite valeur de voile étant obtenue sur un échantillon de 0,94 mm d'épaisseur.

8. Article fabriqué à partir de la composition selon l'une quelconque des revendications 1-7.
